Europäisches Patentamt

**European Patent Office**

**Office européen des brevets**

(19)

(11) Veröffentlichungsnummer : **0 035 663**
**B1**

(12) **EUROPÄISCHE PATENTSCHRIFT**

(45) Veröffentlichungstag der Patentschrift :
05.10.83

(51) Int. Cl.³ : **B 01 D 53/34**

(21) Anmeldenummer : **81101007.3**

(22) Anmeldetag : **13.02.81**

(54) **Verfahren und Vorrichtung zur Entfernung von nitrosen Gasen aus Gasgemischen.**

(30) Priorität : 01.03.80 DE 3008012

(43) Veröffentlichungstag der Anmeldung :
16.09.81 Patentblatt 81/37

(45) Bekanntmachung des Hinweises auf die Patenterteilung : 05.10.83 Patentblatt 83/40

(84) Benannte Vertragsstaaten :
**AT BE CH FR GB LI NL**

(56) Entgegenhaltungen :
EP A 0 001 834
DE A 1 900 861
DE A 2 436 363
DE C 669 803
US A 3 835 622
US A 4 053 555
US A 4 081 517

**ZHURNAL PRIKLADNOI KHIMII, Band 52, Nr. 9,
September 1979, Engl. Übersetzung ; V.P. PANOV
et al. « Evolution of Nitric Oxide during Asorption
of Nitrogen Oxides by Nitric Acid Solutions »
Seiten 1982 bis 1984**

(73) Patentinhaber : **Nukem GmbH
Rodenbacher Chaussee 6 Postfach 11 00 80
D-6450 Hanau 11 (DE)**

(72) Erfinder : **Reus, Josef, Ing. grad.
Forststrasse 3
D-6457 Maintal 3 (DE)**
Erfinder : **Wewer, Hans, Dipl.-Ing.
Kurt-Schumacherstrasse 4
D-6369 Schöneck 1 (DE)**
Erfinder : **Hofmann, Jürgen, Dr. Dipl.-Chem.
Salzkärrnerweg 12
D-6482 Bad Orb (DE)**

(74) Vertreter : **Nowak, Gerhard
DEGUSSA AG Fachbereich Patente Postfach 1345
D-6450 Hanau 1 (DE)**

## Verfahren und Vorrichtung zur Entfernung von nitrosen Gasen aus Gasgemischen

Die Erfindung betrifft ein Verfahren und eine Vorrichtung zur Entfernung von nitrosen Gasen aus Gasgemischen durch Auswaschen der nitrosen Gase mit einer Salpetersäurelösung und Zugabe von Sauerstoff als Oxidationsmittel. Insbesondere dient dieses Verfahren zur Vorreinigung von Gasgemischen, die große Mengen an nitrosen Gasen enthalten, um bei der späteren Feinreinigung Kosten zu sparen.

Die Absorption von nitrosen Gasen ist eine der am schwierigsten zu lösenden Aufgaben innerhalb der Abluftreinigungstechnik. Einer der Hauptwiderstände hierbei liegt in der schlechten Löslichkeit des Stickstoffmonoxids (NO) in wässrigen Systemen. Zum anderen wird, wenn die nitrosen Gase überwiegend als Stickstoffdioxid (NO$_2$) vorliegen, durch Disproportionierung des NO$_2$ in der wässrigen Lösung NO gebildet, welches aufgrund seiner schlechten Löslichkeit in die Gasphase übertritt.

Dieses Stickstoffmonoxid ist dann nur noch mit großem Aufwand aus dem Gasstrom zu entfernen.

Bei der alkalischen Absorption von Stickoxiden entstehen theoretisch Nitrite und Nitrate, wenn zumindest gleiche Volumenanteile NO$_2$ und NO vorliegen bzw. NO$_2$ im Überschuß vorhanden ist.

In der Praxis zeigt sich jedoch, daß trotz Überschuß an Lauge durch nicht idealen Stofftransport in der Flüssigphase und dadurch bedingte örtliche Übersäuerung die Reaktion 3NO$_2$ + H$_2$O 2HNO$_3$ + NO auftritt, und NO im Absorber austritt festgestellt wird.

Außerdem werden in Form von Nitrit und Nitrat große Mengen von Schadstoffen erzeugt, die nur bedingt für die Aufarbeitung zu Düngemitteln geeignet sind.

Es ist bekannt, nitrose Gase aus Gasgemischen mit reduktiven Verfahren zu entfernen. Zur reduzierenden Absorption gibt es die verschiedensten Verfahren. Ihnen allen ist gemeinsam, daß ein reduzierender Stoff, wie z. B. Sulfid oder Thiosulfat, zur Reduktion des NO$_2$ eingesetzt wird, wobei im Idealfall Stickstoff, meist aber Distickstoffmonoxid (N$_2$O) entsteht.

Optimal funktionieren diese reduktiven Verfahren nur, wenn die nitrosen Gase ausschließlich als NO$_2$ vorliegen. Sie werden mit zunehmendem NO-Anteil unwirksamer. Außerdem entstehen durch den Einsatz der erforderlichen Reduktionsmittel hohe Chemikalienkosten. In den meisten Fällen (z. B. bei schwefelhaltigen Reduktionsmitteln) werden in Form der Oxidationsprodukte dieser Reduktionsmittel erneut Schadstoffe erzeugt.

Bekannt sind auch Verfahren zur Entfernung von nitrosen Gasen aus Gasgemischen durch Oxidation der Stickoxide. Als ideal anzusehen sind Verfahren, bei denen aus den Stickoxiden ohne das Auftreten von Sekundärschadstoffen eine wiederverwendbare Salpetersäure erzeugt wird. Allerdings ist für die Oxidation des NO bzw.

des durch Disproportionierung entstehenden NO in der Gasphase ein großer apparativer Aufwand notwendig.

Die Oxidation von konzentriertem Stickstoffmonoxid (NO) erfolgt mit Luftsauerstoff spontan und exotherm zu Stickstoffdioxid (NO$_2$).

Bedingt durch die geringe Wahrscheinlichkeit des gleichzeitigen Aufeinandertreffens von einem O$_2$- und 2NO-Molekülen werden bei dieser Gasphasenoxidation mit abnehmender Stickoxidkonzentration allerdings immer größere Verweilzeiten des Gasgemisches im Reaktor erforderlich.

Bei den auf dem Abluftsektor vorkommenden Stickoxid-Konzentrationen kann das zu Verweilzeiten in der Größenordnung von mehreren Minuten bis zu Stunden führen. Bei den üblichen Abluftmengen kommen dadurch Oxidationsräume bis zu mehreren hundert Kubikmetern Inhalt zustande.

Im Fall der Verwendung von Oxidationschemikalien, wie z. B. Wasserstoffperoxid oder Ozon, treten hohe Chemikalienkosten oder hohe Investitionskosten auf. Allerdings wird hier die Forderung, keinen Sekundärschadstoff zu erzeugen, in idealer Weise erfüllt.

Ein anderes Verfahren, das auf der Verwendung von Kaliumpermanganat (KMnO$_4$) als Oxidationsmittel beruht, funktioniert nur, wenn die Stickoxide zu 50 % aus NO$_2$ bestehen. Das KMnO$_4$ erfüllt hier lediglich eine katalytische Funktion.

Das Kaliumpermanganat wird bei diesem Prozeß zwar theoretisch nicht verbraucht, doch verursachen unvermeidliche Verluste bei dieser teuren Chemikalie in der Praxis hohe Kosten. Außerdem wird hierbei Nitrit erzeugt, das erst aufgearbeitet werden muß oder Abwasserprobleme verursacht.

Aus der EP-A-0 001 834 ist ein Verfahren zum Entfernen von nitrosen Gasen bekannt, bei dem die Gase mit Salpetersäurelösung in einer Absorptionsvorrichtung gelöst und durch Zugabe von Sauerstoff oxidiert werden. Hierbei ist aber die in der Blasensäule der Absorptionsvorrichtung sich lösende Sauerstoffmenge so gering, daß die Oxidation der nitrosen Gase in der Gasphase ablaufen muß, bevor sie sich in der wässrigen Phasen lösen. Die Reaktion läuft daher relativ langsam ab.

Ebenfalls ist es aus der US-A-4 081 517 bei der Herstellung von Salpetersäure bekannt, Stickoxide in Salpetersäure zu lösen. Eine Oxidation der nitrosen Gase erfolgt auch hier nur im geringen Umfang als Nebeneffekt. Eine quantitative Entfernung von nitrosen Gasen aus Gasgemischen ist nicht möglich.

Weiterhin gibt es noch verschiedene Verfahren zur Gasphasenreduktion der nitrosen Gase, z. B. mit Wasserstoff oder auch mit Ammoniak, zu Stickstoff.

Abgesehen von hohem Verbrauch an Wasserstoff oder Ammoniak erfordern diese Verfahren Temperaturen über 250 °C und den Einsatz von Katalysatoren. Nachteilig hierbei ist vor allem der hohe Energieaufwand und die Empfindlichkeit der Katalysatoren gegen Verunreinigungen des Rohgases, wie sie z. B. in der Edelstahlbeizerei unvermeidlich sind.

Es war daher Aufgabe der vorliegenden Erfindung, ein Verfahren und eine Vorrichtung zur Entfernung von nitrosen Gasen aus Gasgemischen durch Auswaschen der nitrosen Gase mit einer Salpetersäurelösung im Kolonnenteil einer aus Kolonne und Sumpf bestehenden Absorptionsvorrichtung und Zugabe von Sauerstoff als Oxidationsmittel zu finden, mit denen die nitrosen Gase schnell, ohne Entstehung von Sekundärabfall und ohne hohe Kosten aus den Gasgemischen entfernt werden können.

Diese Aufgabe wurde erfindungsgemäß dadurch gelöst, daß die nitrosen Gase unterhalb des Kolonnenteils eingespeist und der gasförmige Sauerstoff in die im Sumpf befindliche 15 bis 50 %ige Salpetersäurelösung eingeleitet wird, wobei durch Einstellung der Verweilzeit der Salpetersäurelösung im Sumpf eine ausreichende Sauerstoffbeladung und damit eine Oxidation der nitrosen Gase in der flüssigen Phase erzielt wird.

Erfindungsgemäß werden die Stickoxide, vornehmlich Stickstoffmonoxid, in einer salpetersäurehaltigen Flüssigphase gelöst und dort durch ebenfalls gelösten Luftsauerstoff zu Salpetersäure oxidiert.

Die Löslichkeit von Stickstoffmonoxid ist von der konzentration der Salpetersäure abhängig. Bewährt hat sich für das erfingungsgemäße Verfahren ein Konzentrationsbereich zwischen 15 und 50 Gew.-% $HNO_3$. Vorzugsweise verwendet man eine Lösung, die 25-40 % Salpetersäure enthält. Die Oxidation der Stickoxide zu Salpetersäure erfolgt bei dem erfindungsgemäßen Verfahren in der flüssigen Phase und läuft daher sehr rasch ab, ohne daß kostspielige Einrichtungen oder teure Oxidationschemikalien benötigt werden.

Der Sauerstoff, vorzugsweise Luftsauerstoff, wird der salpetersäurehaltigen Waschflüssigkeit beispielsweise entweder durch direktes Einblasen oder durch Ansaugen mittels Unterdruck zugesetzt.

Es hat sich bei dem erfindungsgemäßen Verfahren bewährt, die Absorption und die Oxidation der nitrosen Gase bei Temperaturen von 10-50 °C, vorzugsweise 20-30 °C, durchzuführen. Daher ist in vielen Fällen eine Kühlung notwendig.

Da sich Sauerstoff in Salpetersäure nicht so gut löst wie die nitrosen Gase, erreicht man einen ausreichenden Sauerstoffeintrag in die Waschflüssigkeit dadurch, daß eine möglichst lange Verweilzeit der Waschflüssigkeit bei der Sauerstoffbeladung erzielt wird.

Vorteilhafterweise verwendet man daher zur Durchführung des erfindungsgemäßen Verfahrens eine Vorrichtung, die aus einem Kolonnenteil und einem Sumpfteil besteht, wobei die Zuführungsleitung für das die nitrosen Gase enthaltende Gasgemisch unterhalb des Kolonnenteils angeordnet ist und die Zuführungsleitung für den Sauerstoff in den Sumpf führt. Vorzugsweise ist das Sumpfvolumen oder das Flüssigkeitsvolumen auf dem nicht vom zu reinigenden Gasgemisch durchströmten Teil der kolonnenböden, abhängig vom Verhältnis der Löslichkeiten und der Gasmengen, größer als das Flüssigkeitsvolumen auf dem vom Rohgas durchströmten Teil der Kolonnenböden, bei Füllkörperkolonnen in der Füllkörperschüttung oder bei gepackten Kolonnen innerhalb der Kolonnenpackung. Vorzugsweise wird das gereinigte Gasgemisch zusätzlich einer bekannten Oxidationsbehandlung mit Wasserstoffperoxid unterworfen, wie sie beispielsweise in der DE-A-28 18 473 beschrieben ist.

Bei dem erfindungsgemäßen Verfahren wird Salpetersäure erzeugt, die aus dem Anlagensumpf automatisch entnommen werden kann. Da es sich bei der Reaktion von NO, Wasser und Salpetersäure um eine Gleichgewichtsreaktion handelt, können Gleichgewichtsbeladungen von NO in der Gasphase und $HNO_2$ in der Salpetersäure errechnet werden. Hierdurch ist es möglich, theoretische Bodenzahlen für die Absorption von NO in der Salpetersäurelösung zu ermitteln. Durch die Anwendung einer Bodenkolonne als 1. Absorptionsstufe nach dem erfindungsgemäßen Verfahren mit zusätzlichem Sauerstoffeintrag in die Flüssigphase wird der Verbrauch von Oxidationschemikalien in einer 2. Stufe, die mit Wasserstoffperoxid arbeitet, auf ca. 10 % reduziert.

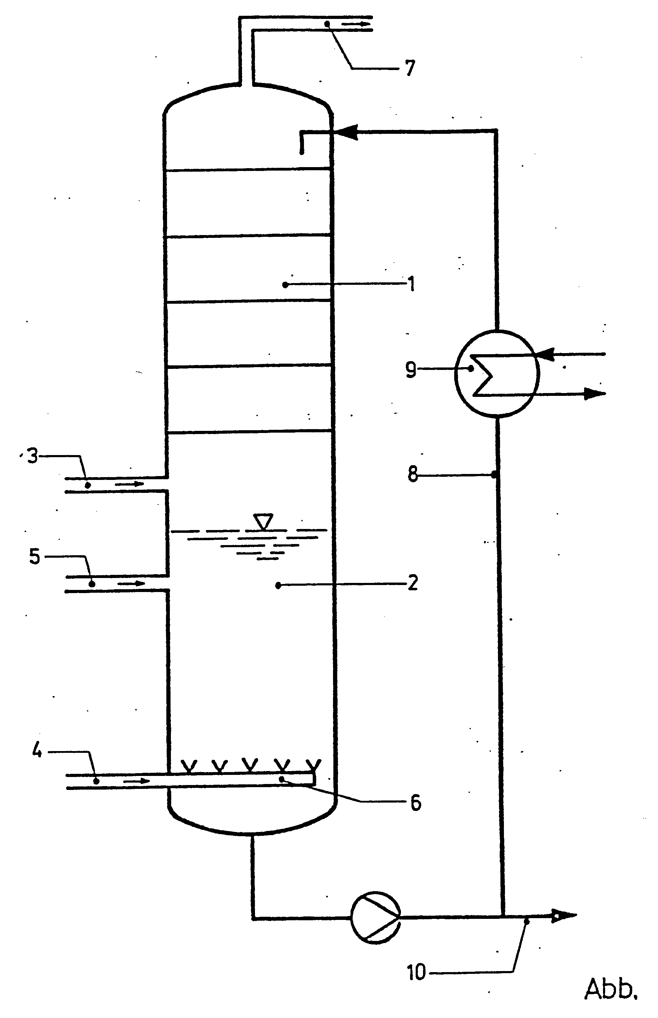

Anhand der Abbildung wird eine Vorteilhafte Ausführungsform einer Vorreichtung zur Durchführung des erfindungsgemäßen Verfahrens schematisch dargestellt.

Die Vorrichtung besteht aus einem Kolonnenteil (1) und einem Sumpfteil (2). Unterhalb des Kolonnenteils (1) befindet sich die Zuführungsleitung (3) für das Gasgemisch und eine Wasserzuführung (5), während die Zuführungsleitung (4) für den Sauerstoff in den Sumpfteil (2) führt.

Das stickoxidhaltige Gasgemisch tritt unterhalb des Kolonnenteils (1) ein und durchströmt den Kolonnenteil (1) im Gegenstrom zur Absorptionslösung von unten nach oben. Das gereinigte Gasgemisch verläßt den Kolonnenkopf über die Reingasleitung (7). Die mit gelösten Stickoxiden angereicherte Absorptionslösung gelangt anschließend in den Kolonnensumpf (2). Hier wird der Sauerstoff, vorzugsweise Luftsauerstoff, durch eine hierfür geeignete Vorrichtung (6) in die Absorptionslösung, d. h. in die flüssige Phase eingetragen. Der zur Oxidation erforderliche Sauerstoffeintrag in die Flüssigkeit kann durch Bereitstellung eines ausreichend großen Flüssigkeitsvolumens im Sumpfteil (2) bei Normaldruck oder bei Überdruck in einem Verweilzeitbehälter in der Waschflüssigkeitskreislaufleitung (8) erfolgen.

Die bei dem Prozeß freiwerdende Gesamtwärme wird durch einen Kühler (9) abgeführt. Die entstehende Salpetersäure wird über eine Leitung (10) der Vorrichtung entnommen.

## Ansprüche

1. Verfahren zur Entfernung von nitrosen Gasen aus Gasgemischen durch Auswaschen der nitrosen Gase mit einer Salpetersäurelösung im Kolonnenteil einer aus Kolonne und Sumpf bestehenden Absorptionsvorrichtung und Zugabe von Sauerstoff als Oxidationsmittel, dadurch gekennzeichnet, daß die nitrosen Gase unterhalb des Kolonnenteils eingespeist und der gasförmige Sauerstoff in die im Sumpf befindliche 15 bis 50 %ige Salpetersäurelösung eingeleitet wird, wobei durch Einstellung der Verweilzeit der Salpetersäurelösung im Sumpf eine ausreichende Sauerstoffbeladung und damit eine Oxidation der nitrosen Gase in der flüssigen phase erzielt wird.

2. Verfahren nach Anspruch 1, dadurch gekennzeichnet, daß als Sauerstoff Luftsauerstoff verwendet wird.

3. Verfahren nach Anspruch 1 oder 2, dadurch gekennzeichnet, daß die Auswaschung der nitrosen Gase mit einer Lösung erfolgt, die 25-40 Gew.-% Salpetersäure enthält.

4. Verfahren nach einem der Ansprüche 1 bis 3, dadurch gekennzeichnet, daß die Absorption und die Oxidation der nitrosen Gase bei einer Temperatur von 10°-50 °C, insbesondere 20°-30 °C stattfindet.

5. Verfahren nach einem der Ansprüche 1 bis 4, dadurch gekennzeichnet, daß das gereinigte Gasgemisch nochmals einer bekannten Oxidationsbehandlung mit Wasserstoffperoxid unterworfen wird.

6. Vorrichtung zur Durchführung des Verfahrens nach einem der Ansprüche 1 bis 5, bestehend aus einem Kolonnenteil und einem Sumpfteil, dadurch gekennzeichnet, daß die Zuführungsleitung (3) für das die nitrosen Gase enthaltende Gasgemisch unterhalb des Kolonnenteils (1) angeordnet ist und die Zuführungsleitung (4) für den Sauerstoff in den Sumpfteil (2) führt.

## Claims

1. A process for the removal of nitrous gases from gas mixtures by washing the nitrous gases with a nitric acid solution in the column part of an absorption apparatus comprising a column and a sump, and by the addition of oxygen as an oxidizing agent, characterised in that the nitrous gases are introduced below the column part and the gaseous oxygen is introduced into the 15 to 50 % nitric acid solution which is in the sump, and as a result of adjusting the residence time of the nitric acid solution in the sump, an adequate oxygen charging and thus an oxidation of the nitrous gases in the liquid phase is achieved.

2. A process according to claim 1, characterised in that atmospheric oxygen is used as oxygen.

3. A process according to claim 1 or 2, characterised in that the nitrous gases are washed with a solution which contains from 25 to 40 % by weight of nitric acid.

4. A process according to one of claims 1 to 3, characterised in that the nitrous gases are absorbed and oxidized at a temperature of from 10 to 50 °C, in particular from 20 to 30 °C.

5. A process according to one of claims 1 to 4, characterised in that the purified gas mixture is again subjected to a known oxidation treatment with hydrogen peroxide.

6. An apparatus for carrying out the process according to one of claims 1 to 5, comprising a column part and a sump part, characterised in that the supply line (3) for the gas mixture containing the nitrous gases is positioned below the column part (1), and the supply line (4) for the oxygen leads into the sump part (2).

## Revendications

1. Procédé d'élimination de vapeurs nitreuses à partir de mélanges gazeux par lavage des vapeurs nitreuses avec une solution d'acide nitrique dans la partie formant la colonne d'un dispositif d'absorption constitué d'une colonne et d'un pied, et par addition d'oxygène comme agent oxydant, procédé caractérisé en ce que les vapeurs nitreuses sont introduites en dessous de la partie formant la colonne et que l'oxygène gazeux est introduit dans la solution d'acide nitrique à une concentration de 15 à 50 %, se trouvant dans le pied de colonne, l'ajustement de la durée de séjour de la solution d'acide nitrique dans le pied de colonne permettant d'obtenir une alimentation en oxygène, et ainsi une oxydation des vapeurs nitreuses satisfaisantes dans la phase liquide.

2. Procédé suivant la revendication 1, caractérisé en ce que comme oxygène on utilise l'oxygène de l'air.

3. Procédé selon l'une des revendications 1 ou 2, caractérisé en ce que le lavage des vapeurs nitreuses s'effectue avec une solution qui contient 25 à 40 % en poids d'acide nitrique.

4. Procédé suivant l'une quelconque des revendications 1 à 3, caractérisé en ce que l'absorption et l'oxydation des vapeurs nitreuses s'effectuent à une température de 10 à 50 °C, de préférence 20 à 30 °C.

5. Procédé selon l'une quelconque des revendications 1 à 4, caractérisé en ce que le mélange gazeux purifié est encore soumis à un traitement d'oxydation connu avec de l'eau oxygénée.

6. Dispositif pour la mise en œuvre du procédé selon l'une quelconque des revendications 1 à 5, où l'appareil est constitué par une partie formant colonne et une partie pied de colonne, dispositif caractérisé en ce que la conduite qui amène (3) du mélange gazeux contenant les vapeurs nitreuses est placée en dessous de la partie formant colonne (1) et que la conduite qui amène (4) l'oxygène est introduite dans la partie pied de colonne (2).

Abb. 1